# EUROPÄISCHE PATENTSCHRIFT

(11) **EP 3 094 778 B1**
(45) Veröffentlichungstag und Bekanntmachung des Hinweises auf die Patenterteilung: **27.05.2020**
(21) Anmeldenummer: 15700282.5
(22) Anmeldetag: 09.01.2015
(51) Int. Cl.: D21F 1/40, B65H 23/025, F16C 13/00

(54) **BREITSTRECKWALZE**
SPREADER ROLL
ROULEAU DÉPLISSEUR

(30) Priorität: 13.01.2014 DE 102014200390
(43) Veröffentlichungstag der Anmeldung: 23.11.2016
(73) Patentinhaber: Voith Patent GmbH, 89522 Heidenheim (DE)
(72) Erfinder: HONOLD, Jochen, 86825 Schlingen (DE); ERKELENZ, Marc, 89231 Neu-Ulm (DE)
(74) Vertreter: Voith Patent GmbH - Patentabteilung
(86) Internationale Anmeldenummer: PCT/EP2015/050309
(87) Internationale Veröffentlichungsnummer: WO 2015/104362

(56) Entgegenhaltungen:
- WO-A1-98/12381
- WO-A1-2004/083661
- WO-A1-2013/167809
- DE-U1- 20 309 301

## Beschreibung

Die Erfindung betrifft eine Breitstreckwalze mit einer feststehenden, an beiden Enden gelagerten und bogenförmig verlaufenden Achse und einem sich auf der Achse abstützenden Walzenmantel.

Derartige Walzen finden insbesondere in Maschinen zur Führung von Materialbahnen Anwendung und sollen dort die Bahn in der Breite strecken um so einen faltenfreien Lauf zu ermöglichen.
Von besonderer Bedeutung ist dies bei der Herstellung und/oder Veredlung von Papier-, Karton-, Tissue- oder anderen Faserstoffbahnen.

Hier zu bestehen bekannte Breitstreckwalzen oft aus mehreren rotierenden und auf einer Achse nebeneinander angeordneten Segmenten. Solche Breitstreckwalzen sind beispielsweise in DE 600 21 923 T2, DE 698 25 899 T2 oder auch in WO 2004/083661 beschrieben. Zwischen diesen Segmenten befinden sich Dichtungen als Schutz vor eindringender Feuchtigkeit. Alternativ kann über die Segmente auch eine Hülle beispielsweise aus Kunststoff, Gummi oder einer Werkstoffkombination gezogen werden.

Dabei erfolgt die Kopplung zwischen den Segmenten entweder über diese Hülle oder über Kupplungen. Diese Konstruktion ist sehr aufwendig und störanfällig.

Weitere Breitstreckwalzen sind in den Schriften DE 203 09 301 U1 und WO 2013/167809 A1 beschrieben.

Die Aufgabe der Erfindung ist es daher die Konstruktion von Breitstreckwalzen zu vereinfachen und möglichst auch robuster zu gestalten.

Erfindungsgemäß wurde die Aufgabe durch eine Breitstreckwalze nach Anspruch 1 gelöst. Dies führt zu einer wesentlich einfacheren und damit auch weniger störanfälligen Gestaltung der Walze. Dies begründet sich durch die geringere Anzahl notwendiger Elemente, insbesondere anspruchsvoller Elemente wie Lager, Kupplungen oder Dichtungen.
Allein der Walzenmantel rotiert. Um dies möglichst reibungsarm zu ermöglichen, sollte sich der Walzenmantel über einen wesentlichen Teil seiner axialen Erstreckung, vorzugsweise über die gesamte axiale Erstreckung über den Fluidfilm auf der Achse abstützen.
Als Schmier-Fluid wird Schmieröl vorzugsweise einer zentralen Schmierölversorgung verwendet. Damit sich der Fluid-Film umfassend ausbilden kann, sollte die Achse mehrere, axial voneinander beabstandete Fluidzuläufe in den Fluidfilm aufweisen. Hierdurch ist es problemlos möglich einen Fluidfilm mit einer Dicke zwischen 0,1 und 5 mm zu gewährleisten.
Um den Aufwand für die Fluid-Versorgung zu minimieren, sollten die Fluid-Zuläufe mit dem gleichen Schmier-Fluid wie die Lager der Achse versorgt werden.

Da die Achse nicht rotiert, vereinfacht sich auch deren Lagerung. Dennoch sollte diese Lagerung eine Verstellung der Lage der Achse und damit ihres Bogens in Umfangsrichtung ermöglichen. Dies erlaubt eine bessere Anpassung des Breitstreck-Effektes an die spezifischen Erfordernisse.

Zur weiteren Vereinfachung der Konstruktion und zur Stabilisierung des Fluidfilms sollten die Lager der Achse eine Abdichtung für den Schmier-Fluid-Spalt zwischen Achse und Walzenmantel besitzen.
Die Rotation des Walzenmantels kann von der Materialbahn selbst ausgehen oder aber über eine Kopplung des Walzenmantels mit einem Antrieb erzeugt werden.

Wegen der ständigen Verformung des Walzenmantels während der Rotation besteht dieser aus einem Kunststoff, vorzugsweise Polyurethan oder Gummi und sollte möglichst auch verstärkende Elemente wie Fasern, Gewebe o.ä. aufweisen.

Das Gleiten des Walzenmantels auf dem Fluidfilm kann durch eine glatte. Innenseite des Walzenmantels unterstützt werden.
Allerdings kann es ebenso vorteilhaft sein, wenn die Innenseite des Walzenmantels aufgeraut oder profiliert ausgebildet ist. Insbesondere axial verlaufende Rillen können durch das Mitschleppen von Fluid den Aufbau des Fluidfilms unterstützen und/oder diesen stabilisieren.

Die Innenseite des Walzenmantels kann aber in bevorzugten Ausführungen auch andere axial ausgeprägte Strukturelemente aufweisen. So müssen Strukturelemente wie Rillen oder ähnliches nicht völlig achsenparallel verlaufen. Als axial ausgeprägtes Strukturelement kann beispielsweise auch zumindest eine Rille vorgesehen sein, die helikal auf der Innenseite des Walzenmantels verläuft. Dabei kann diese helikale Rille über die axiale Ausdehnung des Walzenmantels eine volle Umdrehung oder mehr beschreiben. Sie kann aber auch in weiteren Ausführungsformen weniger als eine volle Umdrehung beschreiben. Üblicherweise werden mehrere solcher Strukturelemente auf der Innenseite des Walzenmantels vorgesehen sein.

Die feststehende Achse ist einstückig ausgeführt. Unter einer einstückigen Ausführung soll dabei verstanden werden, dass die Achse nicht aus mehreren, über die Länge der Achse angeordneten Walzensegmenten besteht. Die Außenseite der Achse, auf die sich der Walzenmantel abstützt, ist über die gesamte Länge der Achse durchgängig, wobei jedoch Öffnungen beispielsweise für die Fluidzuläufe vorgesehen sein können. Die Achse ist aus einem Stück und rotiert nicht. Diese Vereinfachung der Konstruktion kann bereits die Störanfälligkeit deutlich reduzieren. Der Walzenmantel ist das einzig rotierende Teil.

Er läuft direkt, das heißt nur durch den Fluidfilm geschmiert auf der einstückig ausgeführten Achse. Es sind keine weiteren Teile wie z.B. Walzensegmente dazwischen geschaltet. Dies führt zu einer weiteren Vereinfachung der Konstruktion und reduziert auch weiter die Störanfälligkeit.

Weiterhin kann vorgesehen sein, dass die feststehende Achse oder zumindest der Teil, auf den sich der Walzenmantel abstützt, aus Metall, z.B. einem Stahl besteht.

Die Öffnungen der Fluidzuläufe haben vorteilhafterweise in Umfangsrichtung der Walze eine Ausdehnung, die kleiner ist, als der Durchmesser der Walze. Beispielsweise können die Fluidzuläufe als Bohrungen in der Walze ausgeführt sein, wobei der Durchmesser der Bohrungen weniger als 10% des Walzendurchmessers, insbesondere weniger als 5% des Walzendurchmessers beträgt.

Nachfolgend soll die Erfindung an einem Ausführungsbeispiel näher erläutert werden. In der beigefügten Zeichnung zeigt:
Figur 1: einen Längsschnitt durch eine Breitstreckwalze und
Figur 2: einen dazugehörigen Querschnitt.

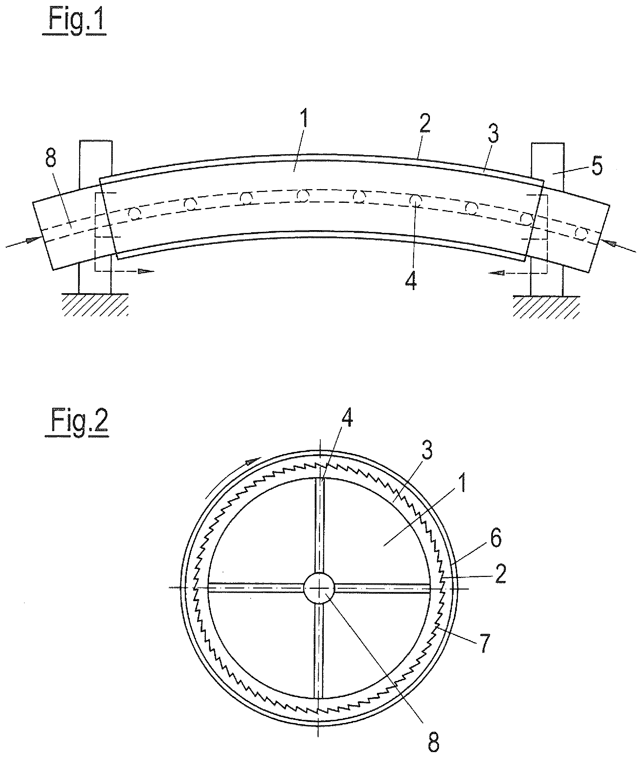

Die Breitstreckwalze besitzt gemäß Figur 1 eine bogenförmig verlaufende Achse 1 aus Stahl mit einer zentralen Zuführleitung 8 für ein Schmier-Fluid, das von Schmieröl gebildet wird. Dabei werden beide Enden der Achse 1 in je einem feststehenden Lager 5 gehalten.
Die Lager 5 erlauben allerdings eine Verstellung der Lage der Achse 1 in Umfangsrichtung.

Zwischen den Lagern 5 befindet sich ein um die Achse 1 rotierender Walzenmantel 2, der sich über einen Schmier-Fluidfilm 3 auf der Achse 1 abstützt.
Wegen der Bogenform der Achse 1 verformt sich der Walzenmantel 2 während der Rotation ständig. Daher besteht der Walzenmantel 2 aus einem flexiblen Kunststoff, vorzugsweise Polyurethan oder Gummi mit verstärkenden Elementen 6 hier in Form eines Gewebes.

Der Walzenmantel 2 kann direkt über einen äußeren Antrieb in Rotation gebracht werden, es ist aber auch ein Mitlaufen mit der Faserstoffbahn infolge Reibung möglich.

Im Interesse einer sicheren und reibungsarmen Führung des Walzenmantels 2 stützt sich dieser über seine gesamte axiale Erstreckung über den Fluidfilm 3 auf der Achse 1 ab. Dabei liegt die radiale Dicke des Fluidfilms 3 zwischen 0,1 und 5 mm.

Um diesen Fluidfilm 3 möglichst umfassend zu gewährleisten, weist die Achse 1 mehrere, axial voneinander beabstandete Fluidzuläufe 4 auf, die mit der zentralen Zuführleitung 8 verbunden sind. Gleichzeitig erfolgt über die Zuführleitung 8 auch die Versorgung der Lager 5 mit Schmier-Fluid.
Zur Vereinfachung des Aufbaus haben die Lager 5 jeweils auch eine Abdicht-Einheit für den Schmier-Fluid-Spalt zwischen Achse 1 und Walzenmantel 2. Über diese Abdicht-Einheit kann dann auch Schmier-Fluid abgezogen werden, um einen Schmier-Fluidkreislauf zu erzeugen.

Wie in Figur 2 zu erkennen, hat die Innenseite des Walzenmantels 2 axial verlaufende Rillen 7, deren Querschnitt einem Sägezahnprofil ähnelt. Hierdurch kann der Transport von Schmier-Fluid in den tragenden Bereich unterstützt werden.

## Patentansprüche

1. Breitstreckwalze mit einer feststehenden, an beiden Enden gelagerten und bogenförmig verlaufenden Achse (1) und einem sich auf der Achse (1) abstützenden Walzenmantel (2), wobei der Walzenmantel (2) rotierbar gelagert ist, aus einem flexiblen Kunststoff, insbesondere aus einem Polyurethan oder aus Gummi besteht, so dass der Walzenmantel (2) während einer Rotation um die bogenförmige Achse (1) sich ständig verformen kann, und sich direkt über einen Schmier-Fluidfilm (3) auf der Achse (1) abstützt, wobei die Achse (1) einstückig und nicht rotierbar ausgeführt ist wobei der Schmier-Fluidfilm (3) von Schmieröl gebildet wird und der Schmier-Fluidfilm (3) eine Dicke zwischen 0,1mm und 5 mm hat.

2. Breitstreckwalze nach Anspruch 1, **dadurch gekennzeichnet, dass** der Walzenmantel (2) mit einem Antrieb gekoppelt ist.

3. Breitstreckwalze nach Anspruch 1 oder 2, **dadurch gekennzeichnet, dass** sich der Walzenmantel (2) über einen wesentlichen Teil seiner axialen Erstreckung, vorzugsweise über die gesamte axiale Erstreckung über den Fluidfilm (3) auf der Achse (1) abstützt.

4. Breitstreckwalze nach einem der vorhergehenden Ansprüche, **dadurch gekennzeichnet, dass** die Achse (1) mehrere, axial voneinander beabstandete Fluidzuläufe (4) für den Fluidfilm (3) aufweist.

5. Breitstreckwalze nach Anspruch 4 **dadurch gekennzeichnet, dass** die Fluid-Zuläufe (4) mit dem gleichen Schmier-Fluid wie die Lager (5) der Achse (1) versorgt werden.

6. Breitstreckwalze nach einem der vorhergehenden Ansprüche, **dadurch gekennzeichnet, dass** die Lage der Achse (1) in Umfangsrichtung verstellbar ist.

7. Breitstreckwalze nach einem der vorhergehenden Ansprüche, **dadurch gekennzeichnet, dass** die Lager (5) der Achse (1) eine Abdichtung für den Schmier-Fluid-Spalt zwischen Achse (1) und Walzenmantel (2) besitzen.

8. Breitstreckwaize nach einem der vorherigen Ansprüche, **dadurch gekennzeichnet, dass** der Walzenmantel (2) verstärkende Elemente (6) wie Fasern, Gewebe o.ä. aufweist.

9. Breitstreckwalze nach einem der vorhergehenden Ansprüche, **dadurch gekennzeichnet, dass** die Innenseite des Walzenmantels (2) aufgeraut oder profiliert ausgebildet ist und vorzugsweise eine axial ausgeprägte Struktur bzw. axial ausgeprägte Strukturelemente wie z.B. axial verlaufende Rillen (7) o.ä. besitzt.

10. Breitstreckwalze nach einem der Ansprüche 1 bis 8, **dadurch gekennzeichnet, dass** die Innenseite des Walzenmantels (2) glatt ist.

## Claims

1. Spreader roller with a fixed axle (1) mounted at both ends and extending in an arc shape and a roller shell (2) supported on the axle (1), wherein the roller shell (2) is rotatably mounted, consists of a flexible plastic, in particular of a polyurethane or of rubber, so that the roll shell (2) can deform continuously during rotation about the arcuate axle (1), and is supported directly on the axle (1) via a lubricating fluid film (3), the axle (1) being made in one piece and non-rotatable, the lubricating fluid film (3) being formed by lubricating oil and the lubricating fluid film (3) having a thickness between 0.1 mm and 5 mm.

2. Spreader roll according to claim 1, **characterized in that** the roll shell (2) is coupled to a drive.

3. Spreader roller according to claim 1 or 2, **characterized in that** the roller shell (2) is supported on the 20 axle (1) over a substantial part of its axial extension, preferably over the entire axial extension via the fluid film (3).

4. Spreader roll according to one of the preceding claims, **characterized in that** the axle (1) has several fluid inlets (4) for the fluid film (3), which are axially spaced apart from one another.

5. Spreader roller according to claim 4, **characterized in that** the fluid inlets (4) are supplied with the same lubricating fluid as the bearings (5) of the axle (1).

6. Spreader roller according to any of the preceding claims, **characterized in that** the position of the axle (1) is adjustable in the circumferential direction.

7. Spreader roller according to one of the preceding claims, **characterized in that** the bearings (5) of the axle (1) have a seal for the lubricating-fluid gap between axle (1) and roller shell (2).

8. Spreader roller according to one of the previous claims, **characterized in that** the roller shell (2) comprises reinforcing elements (6) such as fibres, fabric or the like.

9. Spreader roll according to one of the previous claims, **characterized in that** the inner side of the roll shell (2) is roughened or profiled and preferably has an axially pronounced structure or axially pronounced structural elements such as axially running grooves (7) or the like.

10. Spreader roll according to any one of claims 1 to 8, **characterized in that** the inside of the roll shell (2) is smooth.

## Revendications

1. Rouleau d'épandage avec un axe fixe (1) monté aux deux extrémités et s'étendant en forme d'arc et une enveloppe de rouleau (2) supportée sur l'axe (1), dans lequel l'enveloppe de rouleau (2) est montée de manière rotative, se compose d'une matière plastique flexible, en particulier d'un polyuréthane ou de caoutchouc, de sorte que l'enveloppe du rouleau (2) puisse se déformer en continu lors de la rotation autour de l'axe (1) en forme d'arc, et qu'elle soit supportée directement sur l'axe (1) par l'intermédiaire d'un film de fluide lubrifiant (3), l'axe (1) étant réalisé d'une seule pièce et non rotatif, le film de fluide lubrifiant (3) étant formé d'huile lubrifiante et le film de fluide lubrifiant (3) ayant une épaisseur comprise entre 0,1 mm et 5 mm.

2. Rouleau d'épandage selon la revendication 1, **caractérisé en ce que** la coque du rouleau (2) est couplée à un entraînement.

3. Rouleau d'épandage selon la revendication 1 ou 2, **caractérisé en ce que** l'enveloppe du rouleau (2) est supportée sur l'axe 20 (1) sur une partie substantielle de son extension axiale, de préférence sur toute l'extension axiale par le film de fluide (3).

4. Rouleau d'épandage selon l'une des revendications précédentes, **caractérisé en ce que** l'axe (1) présente plusieurs entrées de fluide (4) pour le film de fluide (3), qui sont espacées axialement les unes des autres.

5. Rouleau écarteur selon la revendication 4, **caractérisé en ce que** les entrées de fluide (4) sont alimentées avec le même fluide lubrifiant que les paliers (5) de l'axe (1).

6. Rouleau épandeur selon l'une des revendications précédentes, **caractérisé en ce que** la position de l'axe (1) est réglable dans la direction circonférentielle.

7. Rouleau d'écartement selon l'une des revendications précédentes, **caractérisé en ce que** les paliers (5) de l'axe (1) présentent un joint pour l'espace de fluide lubrifiant entre l'axe (1) et l'enveloppe du rouleau (2).

8. Rouleau écarteur selon l'une des revendications précédentes, **caractérisé en ce que** l'enveloppe du rouleau (2) comprend des éléments de renforcement (6) tels que des fibres, du tissu ou similaire.

9. Rouleau d'écartement selon l'une des revendications précédentes, **caractérisé en ce que** la face intérieure de l'enveloppe du rouleau (2) est rugueuse ou profilée et présente de préférence une structure axialement prononcée ou des éléments structurels axialement prononcés tels que des rainures (7) s'étendant axialement ou similaires.

10. Rouleau d'écarteur selon l'une des revendications 1 à 8, **caractérisé en ce que** l'intérieur de l'enveloppe du rouleau (2) est lisse.
